# EUROPEAN PATENT APPLICATION

(11) **EP 2 372 537 A1**
(43) Date of publication of application: **05.10.2011**
(21) Application number: 10173761.7
(22) Date of filing: 23.08.2010
(51) Int. Cl.: G06F 9/445, H04L 12/24

(54) **Application portability and transfer of device management for mobile devices**

(30) Priority: 25.06.2010 US 823364; 01.04.2010 US 320115 P
(71) Applicant: Research In Motion Limited, Waterloo, ON N2L 3W8 (CA)
(72) Inventor: Alfano, Nicholas Patrick, Stratford-Upon-Avon, Warwickshire CV37 7JS (GB); Carter, Jason Lee, Sunrise, FL 33323 (US); Clarke, David James, Bellevue, WA 98008 (US); Ferrazzini, Axel Denis, 1050, Brussels (BE); Smith, Christopher David, Mississauga Ontario L4W 0B5 (CA); Godfrey, James Andrew, Waterloo Ontario N2L 5R9 (CA); Omar, Salim Hayder, Waterloo Ontario N2L 3X2 (CA); Parry, Thomas Owen, Waterloo Ontario N2L 5Z5 (CA)
(74) Representative: Roberts, Gwilym Vaughan

(57) **Abstract**

Provided are methods and apparatus for managing software components on a device when transferring device management responsibilities for the device from a first device management server to a second device management server. The capability to change device management servers while coordinating changes to software components on a managed device may be referred to as application portability. A mobile device in the present disclosure may change device management providers while maintaining access to certain licensed applications managed by a device management server. In an embodiment, a proprietary software component may be removed and a replacement software component installed from a category of applications that comprises the removed proprietary software component and the installed replacement software component. Also provided is a mechanism for managing software components on a mobile device switching network providers by sending configuration changes rather than reloading software components that are substantially similar.

## Description

### CROSS-REFERENCE TO RELATED APPLICATIONS

This disclosure claims the priority of U.S. Provisional Application No. 611320,115, filed April 1, 2010, and U.S. Non-Provisional Application No. 12/823,364, filed June 25, 2010.

### FIELD OF TECHNOLOGY

The present disclosure relates generally to mobile devices, and specifically to management of software components in a mobile device.

### BACKGROUND

Mobile devices (such as cellular telephones, smart telephones, portable computers, portable personal digital assistants, data terminals, and portable electronic gaming devices) may be capable of operating in a variety of wireless networks technologies. In this disclosure, a mobile device is any device that uses a wireless bearer for data transfer. Often a mobile device is associated with a network provider. A network provider may operate a wireless telecommunications network or may resell a portion of a wireless telecommunications network owned by another network operator. Additionally, a network provider may provide wireless data services through more than one wireless telecommunications networks (for example, through roaming agreements between network providers).

Using wireless number portability, phone numbers may be transferred or migrated from one network provider to another network provider. For example, there are standards (see, for example, 3GPP 23.066) for mobile number portability that describe how a mobile device may retain a mobile number when changing network providers. However, in some instances when migrating a phone number between providers the mobile subscriber may be asked by the new network provider to obtain a new mobile device. In other instances if the subscriber's existing mobile device is already compatible with a network technology associated with the new network provider, the existing mobile device may require a software reset or re-provisioning to operate on the new network.

As mobile devices become more sophisticated, it may be possible to install and manage a number of software components or applications on the mobile device. Examples of software components may include, but are not limited to, location tracking applications, social network applications, mapping applications, search applications, messaging applications, web browsing applications, or any other application which may be executed by a processor of the mobile device. A network provider may offer proprietary or customized software components to subscribers as a feature of a service contract or (wireless) subscription. For example, a network provider may offer a bundle of applications which are associated with a wireless subscription service. In some cases, these software components may be licensed applications provided free or under contract to a subscriber of the network provider.

To aid in the management of software components on a mobile device, a mobile device may be associated with a Device Management server as set forth by the Open Mobile Alliance (OMA) Device Management (DM) specification. For example, a network provider may utilize a device management server as part of device management architecture associated within the wireless telecommunications network. Alternatively, a mobile device may be managed by a device management server operated by a third party or enterprise. Regardless of the location of the device management server, the device management server may provide a customized set of software components based upon an association with a network provider or a service provider, the service provider being any entity that provides and administers a software component of a mobile device. In some cases, the service provider and the network provider may be different entities, each offering subscription-specific software components via a device management server.

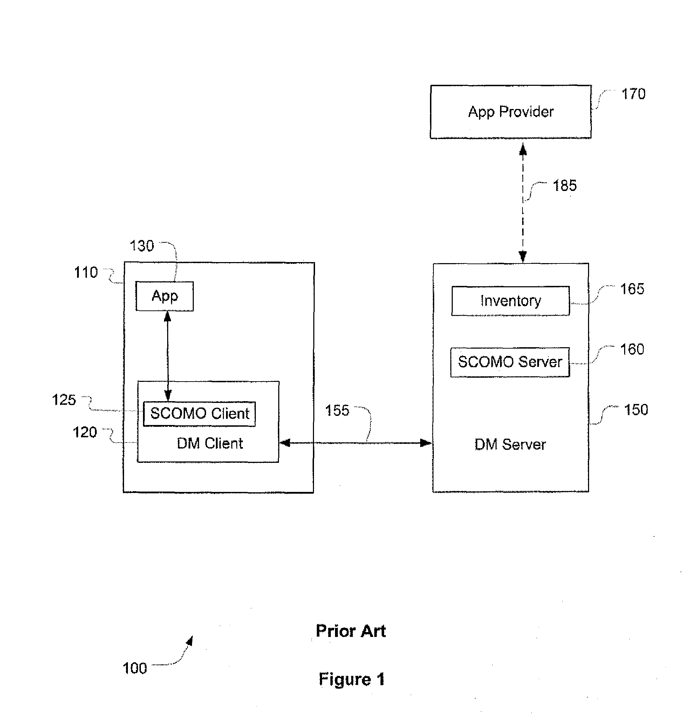

**Figure 1** is an illustration depicting an example device management system 100. The device management system 100 comprises a software component management architecture to manage software components in a mobile device 110. In Figure 1, a mobile device 110 has a device management client 120. The device management client 120 in this example comprises a software component management object (SCOMO) client 125.

The DM client 120 may manage installed software components using the SCOMO client 125 to execute various management operations according to instructions relayed by the DM client. The SCOMO client 125 may be a logical component of the device management client 120. Alternatively, the SCOMO client 125 may be distinct from the DM client 120 and in communication with the DM client 120. The SCOMO client 125 provides a management object for software components that the DM client 120 component provides access to, such that the DM client 120 or DM server 150 can manipulate it. The SCOMO client 125 is configured to execute operations associated with managing software components on the device. For example, these operations may include install, upgrade, removal, or version control for the software component 130.

The DM client 120 in Figure 1 has a communication link, depicted by double headed arrow 155, with DM server 150. The DM server 150 may be a logical process or application configured on a machine or combination of machines (e.g., server hardware device(s)) that provide device management functions. Included as logical components of the DM server 150 are a software component inventory 165 and a SCOMO server 160. In some instances, the SCOMO server 160 may be separate from and in communication with the DM server 150. The SCOMO server 160 may interact (via messages between the DM server 150 and DM client 120) with the SCOMO client 125. The software component inventory 165 comprises a list, table, data structure, XML document, etc. of software components that are installed on the mobile device 110 and managed by the SCOMO server 160.

A first application, software component 130, is installed on the mobile device 110 and managed by the DM client 120 via SCOMO client 125. In Figure 1, software component 130 is associated with an application provider 170. The application provider 170 may use a service provider interface 185 for exchanging communications with the DM server 150. For example, the service provider 170 may provide a subscription service to software component 130, where the SCOMO server 160 manages a license associated with the subscription service and causes the installation or update of the software component 130 via the DM server 150.

When a mobile device changes from a first network provider to a second network provider, the mobile device may become associated with a second device management server. Similarly, there may be a change in device management servers based on a change in service providers. In these cases, if the mobile device loses access to a previous device management server, the mobile device may experience degradation in service associated with installed software components managed by the previous device management server.

In the absence of application portability when changing device management servers, a device may require a reset (e.g., erasing all software components) or may require a difficult, inconvenient or unnecessary process to remove and/or reinstall software components.

### BRIEF DESCRIPTION OF THE DRAWINGS

Figure 1 is an illustration of a device management architecture.

Figure 2 is an illustration of a mobile device associated with a first device management server before changing device management servers.

Figure 3 is an illustration depicting a mobile device changing from a first device management server to a second device management server in accordance with at least one embodiment of the present disclosure.

Figure 4 is an illustration depicting an alternative embodiment of the present disclosure where a mobile device changes from a first device management server to a second device management server.

Figure 5 is an illustration depicting the use of a device management transfer broker in accordance with at least one embodiment of the present disclosure.

Figure 6 is a process flow diagram depicting a transfer of device management from a first device management server to a second device management server.

Figure 7 is a process flow diagram depicting a mobile device transferring from a first device management server to a second device management server in which the mobile device executes a second device management client during and after the transfer.

Figure 8 is a flowchart illustrating a method in a device management server transferring a device management client to a second device management server.

Figure 9 is a block diagram of an example memory structure for information about a software component in an application inventory.

Figure 10 illustrates a wireless communications system including an embodiment of a mobile device in accordance with at least one of the embodiments of the present disclosure.

Figure 11 is a diagram illustrating a processor and related components suitable for implementing at least one of the embodiments described in the present disclosure.

### DETAILED DESCRIPTION

The present disclosure provides a method, apparatus, and system for managing software components when transferring device management responsibilities for a mobile device from a first device management server to a second device management server. The ability to move from a first device management server to a second device management server while coordinating changes to software components may be referred to as application portability. In the same way that a mobile device may be migrated to a new network operator while maintaining the same mobile phone number, a mobile device in the present disclosure may change device management providers while maintaining access to licensed applications managed by a previous device management server.

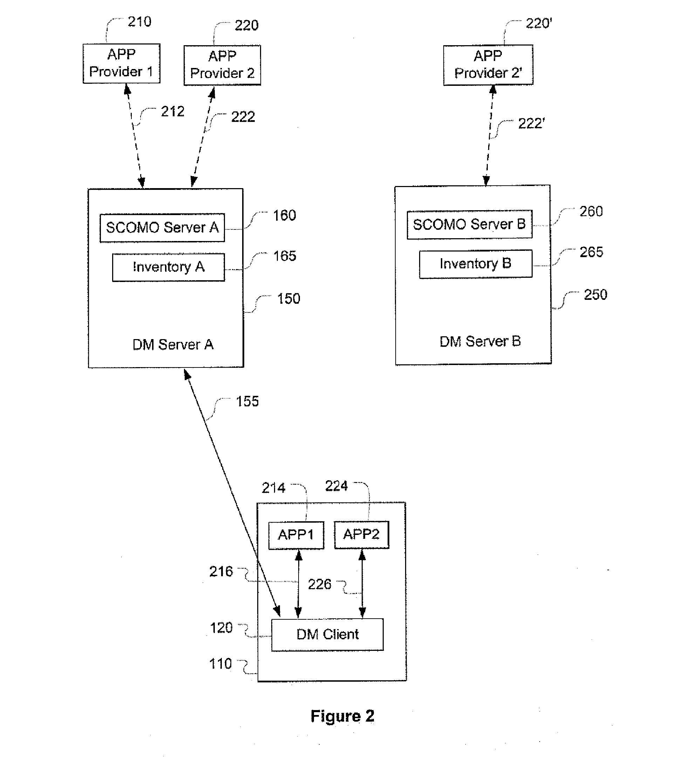

**Figure 2** describes an example scenario related to application portability. In Figure 2, a mobile device 110 is using a device management (DM) client 120 to manage two installed applications, first application 214 and second application 224. In this disclosure an application may also be referred to as a software component. The DM client 120 is using SCOMO client operations, depicted by double headed arrows 216 and 226 to install, update and/or otherwise manage the installations of first application 214 and second application 224, respectively. For example DM client 120 may comprise a SCOMO client for performing the SCOMO client operations 216, 226. The DM client 120 uses a communication link, shown by double headed arrow 155, to communicate with DM server A 150. DM Server A in this example scenario may be associated with a first network provider. In other scenarios, DM Server A may be associated with a third party provider, enterprise, or other device management service provider. DM Server A also includes a software component management object (SCOMO) server A 160 and a SCOMO inventory A 165. In some instances, the SCOMO server A 160 and the SCOMO inventory A 165 may be distinct from and in communication with the DM Server A 150.

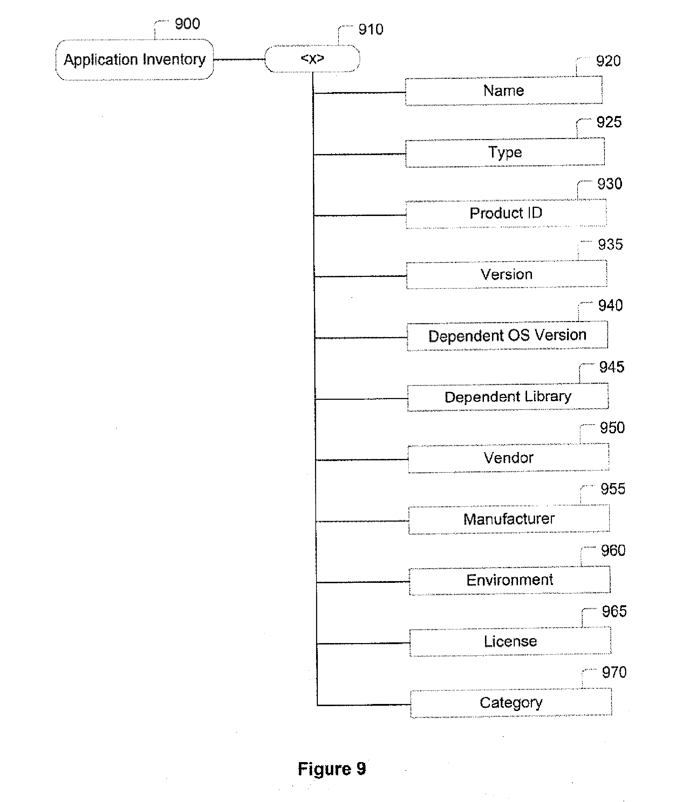

In an example implementation, a SCOMO inventory (also referred to as an application inventory in this disclosure) may be a structured list of software components organized in a standardized format. For example, the SCOMO inventory may be structured so that installed software components are described in an ordered list. The description of each software component may included attributes organized according to a predefined structure. Attributes may include version information, software dependencies, license information, or other attributes such as those described in Figure 9.

It should be understood that mobile device 110 may also build or maintain a mobile device SCOMO inventory (not shown). For example, a SCOMO Client on the mobile device may build a mobile device SCOMO inventory upon request by a DM Server or a SCOMO server. In this way, the mobile device SCOMO inventory is created to include up-to-date information about the installed applications on mobile device. The SCOMO Client may then transmit the mobile device SCOMO inventory to the DM Server so that the DM Server has the most accurate inventory of installed applications. Alternatively, the mobile device 110 may maintain a mobile device SCOMO inventory and update the mobile device SCOMO inventory when applications are installed or removed. Messages between SCOMO Client and SCOMO Server may keep the respective server-based and mobile device-based SCOMO inventories synchronized.

Turning now to an illustrative example in Figure 1, the entity that operates DM Server A 150 has contracted to provide applications from application providers, including first application provider 210 and second application provider 220. It should be understood that the application providers may be separate entities, the same entity as each other, the same entity as the device management server provider, or any relationship where an application provider can provide and manage applications to a mobile device through a device management server. The application provider may also be referred to as a service provider, application host, application service provider, or any term to refer to a provider of a software component executed in a mobile device and managed by a device management server. In some implementations, application providers (such as application provider 170 and other application providers described in this disclosure) may comprise a machine configured to interact with a client application (such as software component 130) on the mobile device. Alternatively, application providers may represent a logical relationship between a software component on the mobile device and a subscription billing profile at the application provider.

In one example, the first application provider (APP Provider 1) 210 may be a provider of a messaging application provided by the same entity that operates the device management server, where the messaging application is the first application 214 installed and managed on the mobile device 110. As a further example, the second application provider (APP Provider 2) 220 may be a provider of a mapping application installed as the second application 224 on the mobile device 110. The mapping application may be branded or otherwise customized according to the requirements of the device management server provider. For example, if the device management server 150 is associated with a first network provider, the mapping application may have configuration values or customizations specific to the first network provider. When installed as the second application 224 on the mobile device 110, the mapping application will operate according to the configuration provided by the DM Server A 150.

Application providers and associated software components may be grouped into categories or classes. For example, one class of application providers and associated software components may comprise mobile applications that are common among network providers with only slight variations for branding or network provider configuration. This class of software components may be referred to as "common" software components. Another class of application providers and associated software components may comprise mobile applications that are unique and/or exclusive to a particular network provider. This class of software components may be referred to as "proprietary" software components.

Figure 2 also depicts a second device management server, DM Server B 250. The DM Server B 250 may, for example, be associated with a second network provider. The DM Server B 250 may include SCOMO inventory B 265 and SCOMO Server B 260 logical components for management of software components for device management clients that are connected to DM Server B 250. In some instances, the SCOMO server B 260 and the SCOMO inventory B 265 may be distinct from and in communication with the DM Server B 250.

In this example scenario, the second application provider also provides a customized mapping application for the second network provider. Designated as second application provider (APP Provider 2') 220', the second application provider may provide a differently customized version of the second application 224 (hereinafter referred to with reference 224' which is not shown in Figure 2). In some cases, the differences between the second application 224 associated with one network provider and the differently customized second application 224' associated with another network provider may comprise configuration parameters, logo or image changes, themes, or other variations of the application. Specifically, the bulk of the software component associated with second applications 224 and 224' may be common, with the differences between second applications 224 and 224' representing partial changes to the application. It should be understood that second applications 224 and 224' may be substantially identical, but associated with an application license managed by either DM Server A 150 or DM Server B 250, respectively.

When a mobile device moves from the first network provider to the second network provider, the DM Client 120 may be disconnected from DM Server A 150 and connected to DM Server B 250. As a result of the change in device management servers, a mobile device may no longer have access to licenses or other configuration management services provided by the previous device management server, For some applications that are licensed or otherwise proprietary or germane to the first device management server, the present disclosure describes how these applications may be removed from the mobile device. For other applications, such as second applications 224 and 224' it may be possible to maintain the installed software component on the mobile device 110 and transfer a license or otherwise change the configuration of the second application (e.g., by a transformation or adaptation process or mechanism such as upgrade or downgrade of application software version) to conform with the requirements of the second device management server.

When a mobile device is migrated from a first network provider to a second network provider, the second network provider may verify that the version of operating system software and firmware of the mobile device is consistent with other similar mobile devices supported by second network provider. For example, the second network provider may specify a firmware upgrade or downgrade on the mobile device to bring the mobile device into alignment with the software versions supported by the second network provider. This may be done prior to connecting the mobile device to the second device management server associated with the second network provider, or may be performed by the second device management server during an initialization process.

Once the device firmware and mobile device operation system (OS) software are correctly configured and the mobile device is connected to the second device management server, then the second device management server may confirm whether the applications existing on the mobile device are supported (e.g., relative to the firmware and OS specified by the second device management server). If the applications are supported by the firmware and OS, then the mobile device or the second device management server may request the previous device management server to provide licensing details. In some cases, the licensing details may be present on the mobile device or may be transferred using a memory of the mobile device. Alternatively, the licensing details may be transferred from the first device management server to the second device management server via a direct server-to-server communication protocol or through a device management transfer broker server. Additionally, there may be a financial reconciliation between the first network provider and the second network provider to compensate the first network provider for costs associated with the license of the application.

If the applications are substantially similar, replacement may not be needed particularly if the mobile device is compatible with more than one network provider and the mobile device is switching network providers. Instead of replacing the application, it may be transformed or adapted (including rebranding) to function on the new network provider network. Transformation or adaptation may include configuring the application with new service provider address, configuration parameters, or various features enabled for each network provider.

If an application is not supported by the second network provider, a substitution or transformation could be performed. For example, the first network provider may provide a first navigation application and the second network provider may provide a second navigation application, different than the first navigation application. When the mobile device migrates from the first network provider to the second network provider, the second network provider may replace the first navigation application with the second navigation application. For example, there may be an agreement between the first network provider and second network provider about a category for navigation applications and a substitute navigation application may be chosen from the category. The grouping of similar common software components into categories of applications aid network providers in selecting appropriate replacement software components. For example, categories of applications may include, without limitation, navigation, mapping, address book, social networking, messaging, browsers, etc.

In some implementations, an application or software component on the mobile device may be a proprietary application associated with DM Server A 150. When the mobile device is moved to DM Server B 250, it may be possible to maintain the first application 214 that is proprietary and associated with the first application provider 210. DM Server B 250 (associated with second network provider) may coordinate with DM Server A 150 (associated with first network provider) in an ongoing manner that allows the first network provider to receive revenue for use of the proprietary application even after the mobile device has moved to the second network provider. For example, the DM Server B 250 may provide proxy management over the proprietary application so that DM Server A 150 may manage the proprietary application via DM Server B 250. The DM Server B 250 may report utilization information to DM Server A 150, allowing DM Server A 150 to coordinate billing for utilization of the proprietary application. Alternatively, the DM Server B 250 may coordinate billing for utilization of the proprietary application so that some or all of the revenue collected for use of the proprietary application may be provided to the first network provider.

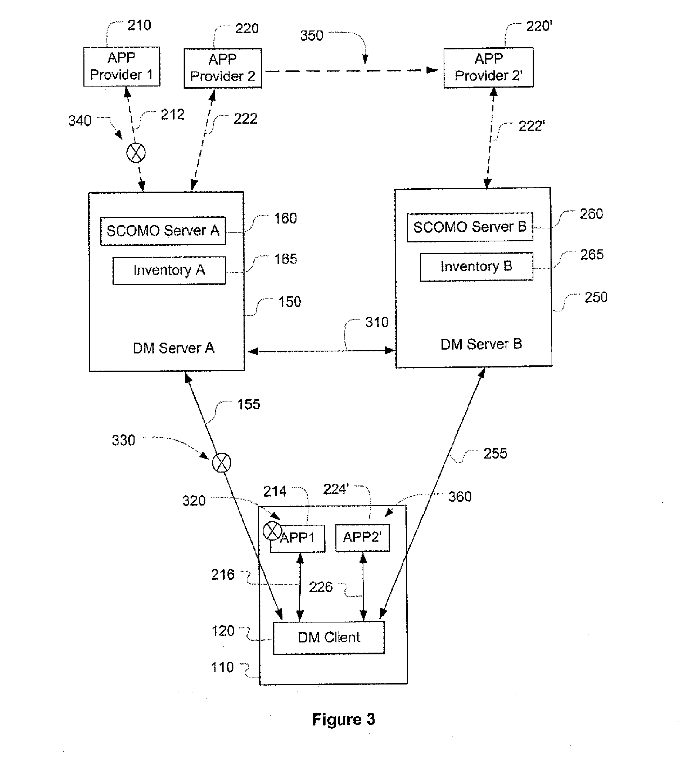

This disclosure describes several techniques supporting the migration of a device management client from a first device management server to a second device management server. In Figures 3-5, the example scenario described at the outset of Figure 2 is used as a context for each of three different techniques supporting migration of the device management client.

**Figure 3** is an illustration depicting a mobile device 110 changing from DM server A 150 to DM server B 250, where the DM servers use a direct management transfer communication link, depicted by double headed arrow 310. In Figure 3, the mobile device 110 has a proprietary application 214 which is proprietary to the first network provider associated with DM Server A 150. In one implementation, DM Server A 150 (or SCOMO Server A 160) sends a removal command to DM Client 120, causing removal 320 of the proprietary application 214. Optionally, the DM Server A 150 may also communicate a deactivation 340 with the first application provider 210 via a software component management interface 212. In another implementation, the first network provider may leave the proprietary application 214 to execute on the mobile device after the mobile device is migrated to the second network provider. This may allow the first network provider to continue to receive revenue for use of the proprietary application 214.

Initially, the DM Client 120 is using a communication link with DM Server A 150, represented by double headed arrow 155. At some point, either the DM Server A 150 or the DM Client 120 disconnects 330 the communication link 155. A second communication link, represented by double headed arrow 255, is established between DM Server 250 and DM Client 120. It should be understood that some implementations of this embodiment might involve the DM Client 120 having communication link 155 and second communication link 255 connected at the same time. However, an installed software component will be associated with only one of the communication link 155 and the second communication link 255. Just as described in Figure 2, this example scenario includes a second application provider 220 that provides a second application on the mobile device. However, when the mobile device becomes associated with the DM Server B, the second application may be customized which results in customized second application 224' and the second application provider 220' has a software management interface 222' with DM Server B 250. Arrow 350 indicates that the second application provider 220 may be modified to become second application provider 220'.

In Figure 3, the direct management transfer communication link 310 provides a communication protocol between DM Server A 150 and DM Server B 250. The management transfer communication link 310 may be implemented using a variety of protocols, including HTTP, FTP, SSH, or any other communication protocol that enables data transfer between two machines. For example, the communication protocol may use a standard language, format, or file type, such as extensible Markup Language (XML), text file, or structured query language (SQL) data. As part of the migration from DM Server A 150 to DM Server B 250, DM Server A 150 will send an inventory of installed software components associated with DM Client 120. This inventory may be retrieved from a memory accessible by the DM Server A 150, such as SCOMO Inventory A 165. Alternatively, the inventory may be retrieved by querying the DM Client 120 for a list of installed applications and associated information.

Based upon the inventory received from DM Server A 150, the DM Server B 250 may request a license file from DM Server A 150, reconcile accounting, or determine other information which must be retrieved from DM Server A 150. For example, the license file may be associated with previous device management server account for managing the mobile device. It should be understood that a license (also referred to as a license file in this disclosure) may be an electronic file, key, or document or any other format of information associated with granting use of a software component on the mobile device.

DM Server B 250 may analyze the inventory to determine what configuration changes are needed to the installed software components. For example, this may include upgrade, downgrade, rebranding, configuration parameter changes, user specific settings, or removal of a software component. If any changes are needed, DM Server B 250 (or SCOMO Server B 260) sends SCOMO instructions to the DM Client 120 to cause a change to the software component. For example, the DM Client 120 may relay the SCOMO instructions to a SCOMO client that consumes the SCOMO instructions and executed SCOMO operations in accordance with the SCOMO instructions. In this example scenario, DM Server B 250 may send SCOMO instructions which modify the second application 224 (not shown) to cause it to behave like customized second application 224'. It should be noted that modification to an installed application may be more efficient than removal of an application and installation of a similar application.

In one embodiment, the management transfer communication link 310 may be used even after transfer of the mobile device from DM Server A 150 to DM Server B 250. For example, the management transfer communication link 310 may be used so that the DM Server A 150 may utilize DM Server B 250 as a proxy to manage the proprietary application 214. Alternatively, the management transfer communication link 310 may be used by the DM Server B 250 so that the DM Server B 250 may report utilization information regarding utilization of the proprietary application 214 to DM Server A 150.

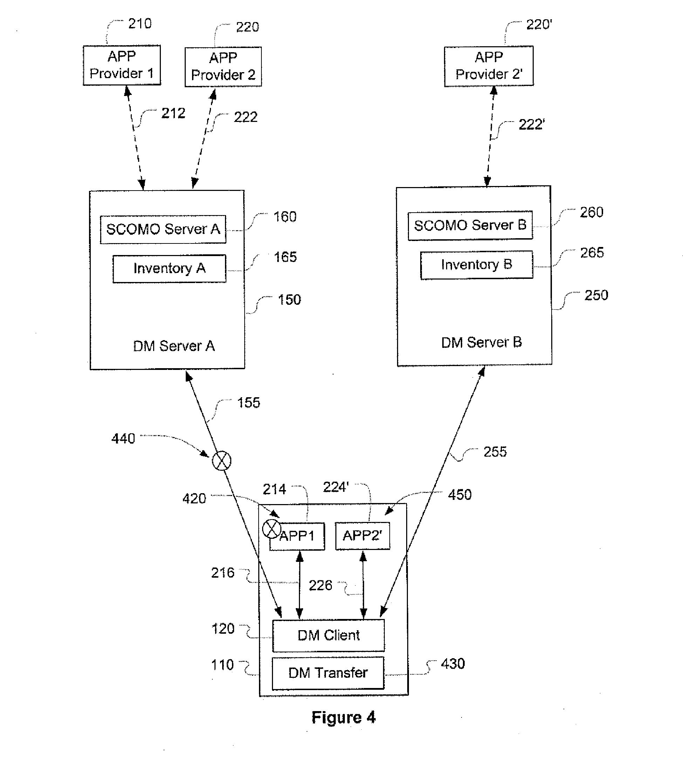

**Figure 4** is an illustration depicting an alternative embodiment of the present disclosure where a mobile device changes from a first device management server to a second device management server. In Figure 4, there is no direct management transfer communication link (e.g., as per link 310 in Figure 3) between DM Server A 150 and DM Server B 250. For example, the network providers associated with each of these DM Servers may not have enabled a direct server-to-server communication path or credentials. Similar to Figure 3, mobile device 110 has installed a proprietary first application 214 that is proprietary to the DM Server A 150. Initially the mobile device 110 also has installed a second application 224 (not shown) which is associated with second application provider 220 and managed by DM Server A 150.

Because there is no direct management transfer communication link between DM Server A and DM Server B, the transfer of management responsibilities may involve the use of a portion of memory, represented by DM Transfer information 430, in the mobile device 110. DM Transfer information 430 may comprise a temporary license associated with installed software components, providing a limited amount of time for the mobile device to utilize the installed software component before completing migration to DM Server B. In Figure 4, the proprietary first application 214 is removed as is indicated by reference number 420, the DM Transfer Information 430 is updated, and the connection 155 between DM Server A 150 and the DM Client 120 is disconnected as is indicated by reference number 440. In some embodiments, the proprietary first application 214 may not be removed, such as when the network provider associated with DM Server A 150 will continue to license the use of the first proprietary application 214 after management of the mobile device is transferred to DM Server B 250. Upon activating a second connection 255 between DM Client 120 and DM Server B 250, the DM Transfer information 430 may be used by the DM Server B 250 to complete the migration. For example, DM Server B 250 may retrieve an inventory from the DM Client 120 and/or the DM Transfer information 430 to determine the installed software components on mobile device 110.

In this example, DM Server B identifies that second application 224 (not shown) is installed on the mobile device 110 and that it may be modified by DM Client 120 to transform to customized second application 224'. If there was a temporary license stored in the DM Transfer information 430, the DM Server B 250 may communicate the temporary license to the second application provider 220' via communication link 222' to obtain a new license.

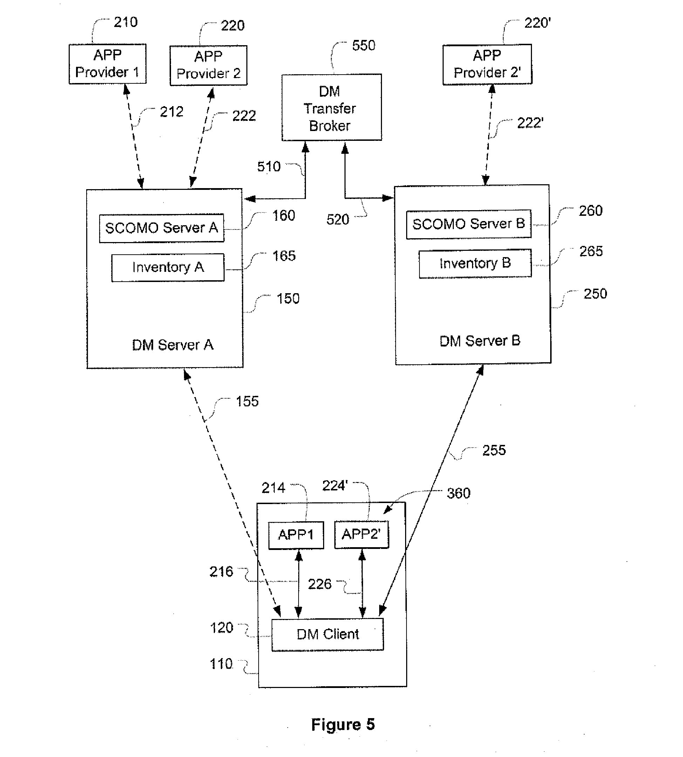

**Figure 5** is an illustration depicting the use of a device management transfer broker 550 to coordinate migration of inventory and/or license files from DM Server A 150 to DM Server B 250. The DM transfer broker 550 may be a trusted third party, escrow, proxy, or other middleware component that enables the transfer of information and licenses between DM Servers. In Figure 5, DM Server A 150 would communicate via a first communication link 510 with the DM Transfer broker 550 to send inventory and/or license information to the DM Transfer broker 550. When the DM Client 120 becomes associated with DM Server B 250, via communication link 255, the DM Server B 250 could retrieve the inventory and/or license information from the DM Transfer Broker 550.

It should be noted that Figures 3-5 may also include an authentication or validation procedure associated with the transfer of device management responsibilities. This could be performed prior to any license or inventory information being shared with DM Server B 250. The validation would ensure that DM Server B 250 is properly authenticated and delegated with the responsibility for managing software components on mobile device 110.

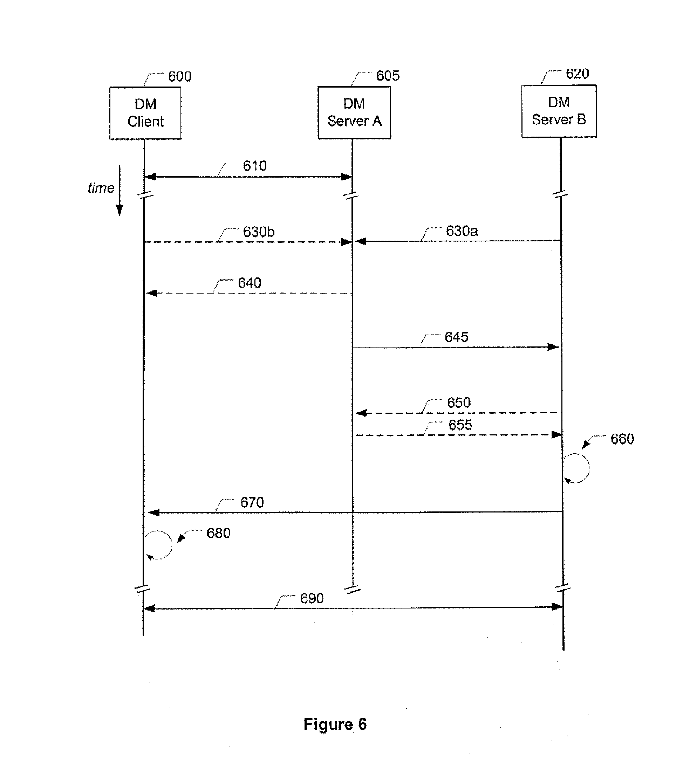

**Figure 6** illustrates a flow diagram showing communications which may be performed in an example application portability process, such as described in Figure 3. In Figure 6, a DM Client 600 is initially managed, shown by arrow 610, by DM Server A 605. At arrow 630a, there is a request from DM Server B 620 to DM Server A 605 to begin a management transfer operation. Alternatively, DM Server A 605 may receive a management transfer request from the DM Client 600, as shown at arrow 630b. Typically the operations at 630a or 630b might occur due to a change in network provider or device management service providers.

At arrow 640, the DM Server A 605 may cause removal of proprietary software components. Alternatively, the DM Server A 605 may leave the proprietary software components, such as when there is an agreement that licenses the continuing use of the proprietary software component after the migration. At arrow 645, DM Server A 605 communicates an inventory of installed software components to DM Server B 620. At arrows 650 and 655 there optionally may be one or more communications between DM Server A 605 and DM Server B 620 to exchange license and/or configuration information.

At process 660, DM Server B determines software component changes based on network provider parameters and configuration requirements. This may include a determination to upgrade, downgrade, re-brand, update configurations, or remove incompatible applications. At arrow 670, DM Server B 620 sends SCOMO instructions to the DM Client 600 based on the determined changes. At arrow 680, DM Client 600 acts on the SCOMO instructions to conform the software components. For example, DM Client 600 may relay the SCOMO instructions to a SCOMO client configured to execute SCOMO operations in accordance with the SCOMO instructions. As a result of the migration operation, the DM Client 600 is managed by DM Server B 620, shown by arrow 690.

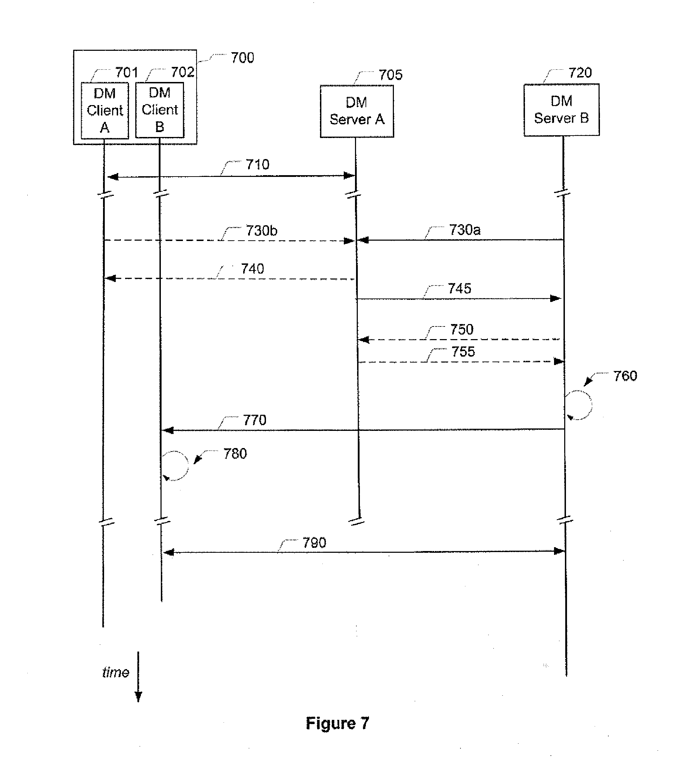

**Figure 7** is a process flow diagram in which application portability is shown moving a user equipment 700 from a first DM Server A 705 to DM Server B 720. In Figure 7, the user equipment operates a first DM Client A 701 and a second DM Client B 702, connected to first DM Server A 705 and DM Server B 720, respectively. Initially, depicted by arrow 710, the user equipment 700 is managed using DM Client A 701 and is managed by DM Server A705.

At arrow 730a, there is a request from DM Server B 720 to DM Server A 705 to begin a management transfer operation. Alternatively, DM Server A 705 may receive a management transfer request from the DM Client A 701, as shown at arrow 730b, or from DM Client B 702. At arrow 740, the DM Server A 705 may cause removal of proprietary software components. Alternatively, the DM Server A 705 may leave the proprietary software components, such as when there is an agreement that licenses the continuing use of the proprietary software component after the migration. At arrow 745, DM Server A 705 communicates an inventory of installed software components to DM Server B 720. At arrows 750 and 755 there optionally may be one or more communications between DM Server A 705 and DM Server B 720 to exchange license and/or configuration information.

At process 760, DM Server B 720 determines software component changes based on network provider parameters and configuration requirements. This may include a determination to upgrade, downgrade, re-brand, update configurations, or remove incompatible applications. At arrow 770, DM Server B 720 sends SCOMO instructions to the DM Client B 702. In addition to the SCOMO instructions, there may also be an initialization or installation of DM Client B 702. At arrow 780, DM Client B 702 acts on the SCOMO instructions to conform the software components. DM Client A 701 may be deactivated or uninstalled as a result of the change of management responsibility to DM Client B 702. Alternatively, the two DM Clients may coexist on user equipment 700 with connectivity to their respective DM Server. At arrow 790, the DM Client B 702 is managed by DM Server B 720.

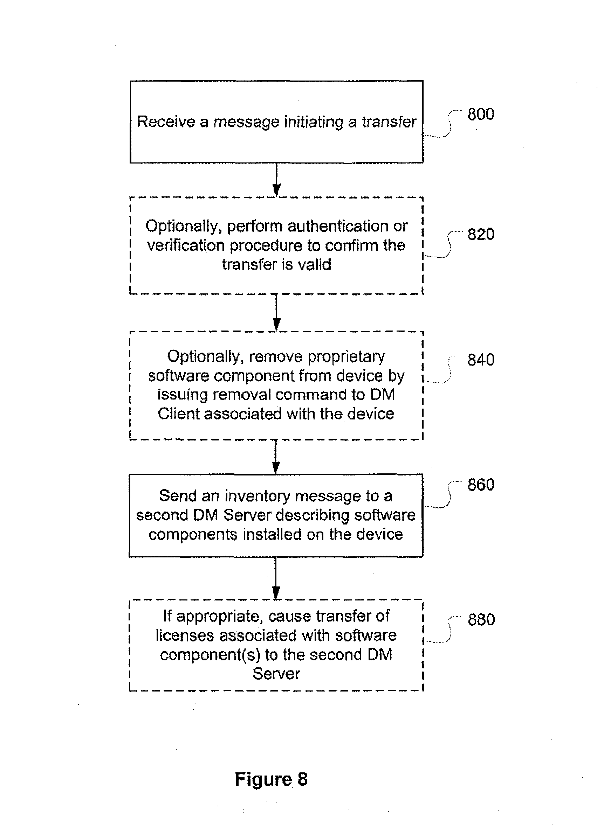

**Figure 8** is a flowchart illustrating a method in a first device management server transferring a device management client to a second device management server, which may be performed in an example application portability processed described in this disclosure. At block 800, the first DM Server receives a message initiating the transfer. Optionally, at block 820, the first DM Server may perform authentication or verification procedures to confirm the transfer is valid. At block 840, first DM Server may cause the removal of proprietary software components from a managed device. This may include issuing one or more removal commands to a DM Client on the managed device. At block 860, the first DM Server sends an inventory to a second DM server describing software components installed on the device. The inventory may be sent as part of an inventory message or may be a collection which may be combined by the second DM server to construct an inventory of the installed software components. At block 880, the first DM Server may transfer software licenses or keys associated with one or more installed software components to the second DM Server.

**Figure 9** is a diagram representing a memory structure that may be associated with a SCOMO inventory (also referred to as application inventory) in accordance with at least one embodiment described in this disclosure. The SCOMO inventory may comprise a standardized list of software components and attributes associated with each software component. The attributes may provide details to allow for identification, operating system dependencies, version control, or other software component management information. The inventory may also include information about the mobile device operating system. For example, if a software component requires a particular feature within an operating system, the SCOMO inventory may include attributes and information regarding the operating system feature. In one embodiment, the SCOMO inventory may utilize a data structure comprising container nodes and information nodes. For example, the data structure may be a tree structure with leaf nodes.

In Figure 9, element 900 represents a parent node associated with the SCOMO inventory. Element 910 is a node group which comprises the leaf nodes associated with a first software component. Each software component described in SCOMO Inventory 900 may be represented by a separate node group, such as node group 910. In Figure 9, a first software component is described in the leaf nodes belonging to node group 910. The name leaf node 920 may include a name of the software component. The type leaf node 925 may include an application type or description of the software component. Product ID leaf node 930 may comprise a unique identifier or label associated with the software component. Version leaf node 935 may comprise a version identification. If there are any operating system dependencies, such as OS version or OS feature, they may be described in dependent OS version leaf 940. Dependencies on other software components may be described in dependent library leaf node 945. Other information regarding the source of the software component may be included in vendor leaf node 950 or manufacturer leaf node 955. Environment information (such as runtime environment) may be described in environment leaf node 960. A license leaf node 965 may be used to indicate a class associated with a software component (such as indicating if the software component is a "proprietary" software component or "common" software component). Alternatively, license leaf node 965 may comprise license or key information associated with the software component. Category leaf node 970 may include an indication of the category associated with the software component (such as mapping application, messaging application, etc).

It should be recognized that various nodes described in this example memory structure may be optional, may be labeled with different names for each leaf node, or may be defined differently within the data structure. A SCOMO inventory may be organized according to example data structure of Figure 9 or other data structure according to at least one of embodiments described in the present disclosure.

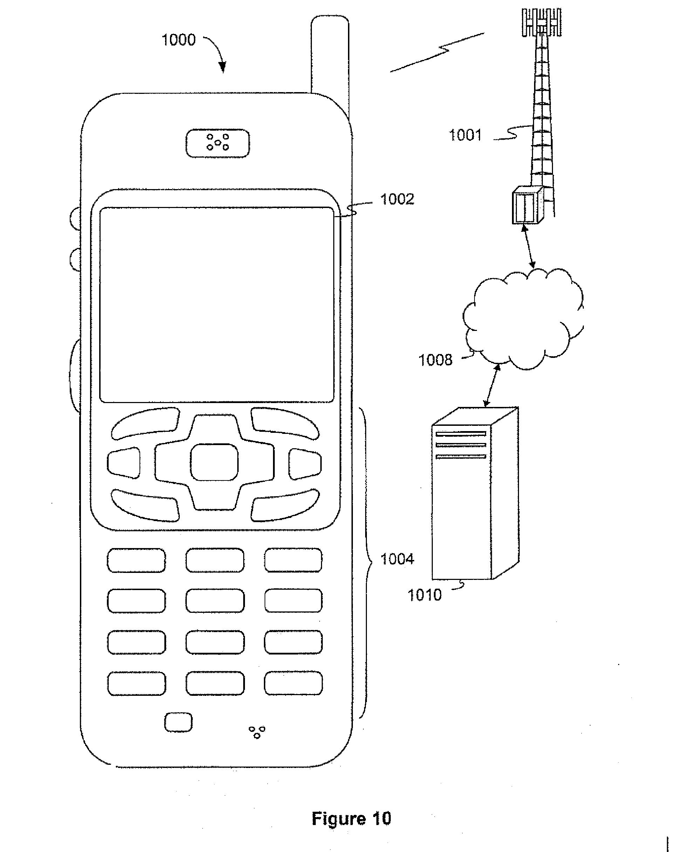

**Figure 10** illustrates an example wireless communications system including an embodiment of a mobile device. The mobile device 1000 is operable for implementing aspects of the disclosure, but the disclosure should not be limited to these implementations. The mobile device 1000 may be (or be a part of) a smart phone, wireless router, relay, laptop computer, tablet computer, GPS-enabled device, Navigation System, wireless mobile tracking device or any other device which may transmit information via a wireless network 1001.

The mobile device 1000 may include a user interface that includes a display 1002 and a user input 1004. The user input 1004 of mobile device 1000 may be or include a touch-sensitive surface, a keyboard or other input keys known in the art. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. The mobile device 1000 may present options for the user to select, controls for the user to actuate, and/or cursors or other indicators for the user to direct.

The mobile device 1000 may further accept data entry from the user, including numbers to dial or various parameter values for configuring the operation of the mobile device 1000. The mobile device 1000 may further execute one or more software or firmware applications in response to user commands. These applications may configure the mobile device 1000 to perform various customized functions in response to user interaction. Additionally, the mobile device 1000 may be programmed and/or configured over-the-air, for example from a wireless base station, a wireless access point, or a peer mobile device 1000.

Among the various applications executable by the mobile device 1000 is, for example, a PIM application for storing, retrieving and otherwise managing PIM records or information. Another application may be a web browser, which enables the display 1002 to show a web page. The web page may be obtained via wireless communications with a wireless network access node, a cell tower, a peer mobile device 1000, or any other wireless communication network or system 1000. The network 1001 may be coupled to a wired network 1008, such as the Internet. Via the wireless link and the wired network, the mobile device 1000 can have access to information on various servers, such as a device management server 1010. The device management server 1010 may provi de device management functions as described in this disclosure via communications with a device management client (not shown) on mobile device 1000. The mobile device 1000 and other components described above may include a processing component that is capable of executing instructions related to the actions described above.

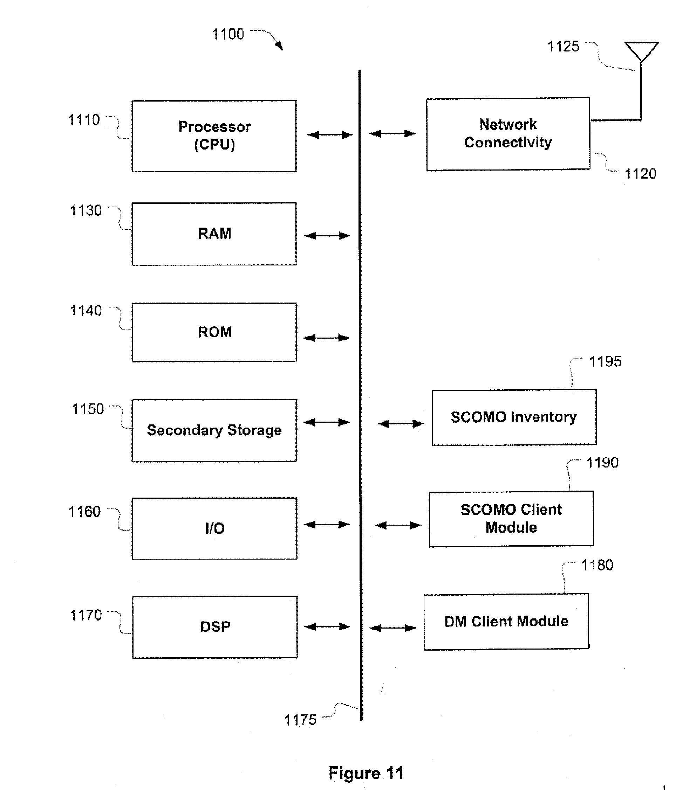

**Figure 11** illustrates an example embodiment of an apparatus 1100 that may be configured to operate as a device (e.g., mobile device 110, device management server such as DM Server A 150 or DM Server B 250) which includes a processing component 1100 suitable for implementing one or more of the embodiments earlier described herein. In addition to the processor 1100 (which may be referred to as a central processor unit or CPU), the system 1100 may include network connectivity devices 1120, random access memory (RAM) 1130, read only memory (ROM) 1190, secondary storage 1150, and input/output (I/O) devices 1150. These components may communicate with one another via a bus 1175. In some cases, some of these components may not be present or may be combined in various combinations with one another or with other components not shown. These components may be located in a single physical entity or in more than one physical entity. Any actions described herein as being taken by the processor 1100 might be taken by the processor 1100 alone or by the processor 1100 in conjunction with one or more components shown or not shown in the drawing, such as a digital signal processor (DSP) 1170. Although the DSP 1170, is shown as a separate component, the DSP 1170 may be incorporated into the processor 1100.

The processor 1100 executes instructions, logic, codes, computer programs, or scripts that it may access from the network connectivity devices 1120, RAM 1130, ROM 1140, or secondary storage 1150 (which might include various disk-based systems such as hard disk, floppy disk, or optical disk). In one embodiment, a computer readable medium may store computer readable instructions, which when executed by the processor 1100, cause the processor to perform according to a method described in this disclosure. While only one CPU 1100 is shown, multiple processors may be present. Thus, while instructions may be discussed as being executed by a processor, the instructions may be executed simultaneously, serially, or otherwise by one or multiple processors. The processor 1100 may, for example, be implemented as one or more CPU chips or modules. The processor 1100 may also be integrated with other functions of portable electronic device 110 in or on a single chip or module.

The network connectivity devices 1120 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WIMAX) devices, and/or other well-known devices for connecting to networks. These network connectivity devices 1120 may enable the processor 1100 to communicate with the Internet or one or more telecommunications networks or other networks from which the processor 1100 might receive information or to which the processor 1100 might output information. The network connectivity devices 1120 might also include one or more transceiver components 1125 capable of transmitting and/or receiving data wirelessly.

The RAM 1130 might be used to store volatile data and perhaps to store instructions that are executed by the processor 1100. The ROM 1140 is a non-volatile memory device that in some cases has a smaller memory capacity than the memory capacity of the secondary storage 1150. ROM 1140 might be used to store instructions and perhaps data that are read during execution of the instructions. Access to both RAM 1130 and ROM 1140 is typically faster than to secondary storage 1150. The secondary storage 1150 is typically comprised of one or more disk drives or tape drives and might be used for non-volatile storage of data or as an over-flow data storage device if RAM 1130 is not large enough to hold all working data. However, the secondary storage 1150 could be implemented using any appropriate storage technology, including so-called "solid state disk", FLASH, EEPROM, or other generally non-volatile or persistent storage. Secondary storage 1150 may be used to store programs that are loaded into RAM 1130 when such programs are selected for execution.

SCOMO Inventory 1195 may comprise a separate memory or may be implementing using RAM 1130, ROM 1140, or secondary storage 1150. SCOMO Inventary 1195 may comprise a data structure, such as the example data structure described in Figure 9.

The I/O devices 1160 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 1125 might be considered to be a component of the I/O devices 1160 instead of or in addition to being a component of the network connectivity devices 1120. Some or all of the I/O devices 1160 may be substantially similar to various components depicted in the previously described drawing of the mobile 1000, such as the display 1002 and the input 1004.

Also shown in Figure 11, DM Client Module 1180 may be implemented as a component of mobile device 1100. In one embodiment, DM Client Module 1180 may be implemented by coordination of computer readable instructions stored in memory (such as RAM 1130, ROM 1140, or secondary storage 1150) executed in processor 1110. DM Client Module 1180 may be configured to receive SCOMO instructions from a DM Server. The CM Client Module 1180 may relay the SCOMO instructions to a SCOMO Client Module 1190. SCOMO Client Module 1190 may be implemented as a component of mobile device 1100 and may be configured to execute SCOMO operations in accordance with the SCOMO instructions. SCOMO operations may comprise one of updating application parameters, brand configuration, version modification, installation instructions, upgrade instructions, downgrade instructions, substitution instructions, and removal instructions.

The steps, processes, or operations described herein are examples. There may be many variations to these steps or operations without departing from the scope of this disclosure. For instance, where appropriate, the steps may be performed in a differing order, or steps may be added, deleted, or modified.

Although example embodiments of this disclosure have been depicted and described in detail herein, it will be apparent to those skilled in the relevant art that various modifications, additions, substitutions, and the like can be made without departing from the concepts and embodiments disclosed herein, and these are therefore considered to be within the scope of the present subject matter as defined in the following claims.

## Claims

1. A method executed by a first device management server, the method comprising:
accessing an inventory of software components that are installed on a mobile device;
establishing a communication link from the first device management server to a second device Management server; and
sending the inventory to the second device management server via the communication link.

2. The method of claim 1, wherein accessing the inventory comprises at least one of:
maintaining the inventory in a memory of the first device management server and retrieving the inventory from the memory; and
requesting the inventory from a device management client on the mobile device and receiving the inventory from the device management client.

3. The method of claim 1, further comprising:
before sending the inventory message:
sending a deactivation command to a device management client on the mobile device, wherein the deactivation command comprises an identification of at least one proprietary software component to be removed from the mobile device;
receiving a removal confirmation message from the device management client, the removal confirmation message indicating that the proprietary software component was removed from the mobile device;
removing the proprietary software component from the inventory; and
optionally,
deactivating a license or key associated with the proprietary software component.

4. The method of claim 1, further comprising:
before sending the inventory message:
receiving a transfer initiation message from the second device management server; and
performing a transfer authentication procedure.

5. The method of claim 1, further comprising:
receiving a license request message from the second device management server identifying at least one installed software component;
sending a license transfer message to the second device management server, wherein the license transfer message includes a license or key associated with the identified installed software component.

6. A method in a device management server, the method comprising:
establishing a communication link with a previous device management server associated with a mobile device;
receiving an inventory message from the previous device management server, the inventory message including the inventory of installed software components associated with the mobile device; and
sending software component management object (SCOMO) instructions to the mobile device, the SCOMO instructions instructing a change to at least one installed software component.

7. The method of claim 6 wherein the SCOMO instructions comprise one of updating application parameters, brand configuration, version modification, installation instructions, upgrade instructions, downgrade instructions, substitution instructions, and removal instructions.

8. The method of claim 6 wherein the SCOMO instructions comprise a substitution instruction and the substitution instruction causes removal of the at least one installed software component and installation of a different software component.

9. The method of claim 8 wherein the at least one installed software component and the different software component belong to the same category of software components.

10. The method of claim 6 further comprising:
obtaining a license key from the previous device management server, the license key associated with at least one of the installed software components.

11. A method in a mobile device, comprising:
initiating a migration from a first device management (DM) server to a second DM server;
receiving a SCOMO instruction from the second DM server, the SCOMO instruction indicating one of upgrade, downgrade, configuration change, substitution, and removal with respect to a first software component installed on the mobile device; and
modifying the first software component as indicated in the SCOMO instruction.

12. The method of claim 11, further comprising:
receiving an inventory request message from the second DM server; and
sending an inventory response message to the second DM server, the inventory response message comprising an identification of at least the first software component.

13. The method of claim 12, further comprising:
creating or maintaining a software component inventory in a memory of the mobile device; and
transmitting the software component inventory to the second DM server.

14. The method of claim 12, wherein modifying the first software component comprises:
removing the first software component; and
installing a second software component belonging to a same category of software components to which the first software component belongs.

15. An apparatus configured to perform any one of the method claims 1-14.
